# FASCICULE DE BREVET EUROPEEN

(11) **EP 2 411 260 B1**
(45) Date de publication et mention de la délivrance du brevet: **08.04.2015**
(21) Numéro de dépôt: 10709883.2
(22) Date de dépôt: 18.02.2010
(51) Int. Cl.: B62D 25/20

(54) **STRUCTURE DE CHÂSSIS ARRIERE DE VEHICULE AUTOMOBILE**
CHASSISHECKSTRUKTUR FÜR EIN KRAFTFAHRZEUG
REAR CHASSIS STRUCTURE FOR A MOTOR VEHICLE

(30) Priorité: 25.03.2009 FR 0951928
(43) Date de publication de la demande: 01.02.2012
(73) Titulaire: Peugeot Citroën Automobiles Société Anonyme, 78140 Vélizy Villacoublay (FR)
(72) Inventeur: MAUDUIT, Franck, F-91490 Milly La Forêt (FR)
(74) Mandataire: Fernandez, Francis Lionel
(86) Numéro de dépôt international: PCT/FR2010/050272
(87) Numéro de publication internationale: WO 2010/109102

(56) Documents cités:
- EP-A- 1 916 178
- FR-A- 2 914 616
- JP-A- 10 297 541

## Description

La présente invention concerne une structure de châssis arrière de véhicule automobile. Elle concerne aussi un véhicule automobile, qui comporte une telle structure de châssis arrière.

On connaît déjà des structures de châssis arrière, qui présentent des moyens de renforcement mécanique et de liaison entre au moins deux éléments de la structure, tels que des longerons.

Le document JP 10-297541 décrit un panneau de renforcement entre une partie de châssis arrière et le longeron, d'après le préambule de la revendication 1 qui permet de faire la jonction avec la traverse de plancher centrale.

A titre d'exemple également, le document US 7 222 911 B2 décrit une structure de caisse de véhicule, qui comporte un brancard et un élément de châssis arrière fixés l'un à l'autre de manière continue, avec une partie incurvée formée dans le voisinage de la zone de la jonction entre le brancard et l'élément de châssis arrière. Cette structure intègre une pièce d'assemblage, qui assure la jonction entre la traverse de plancher médiane et le flanc intérieur du brancard.

A titre d'exemple aussi, le document US 2004/0183340 A1 décrit un longeron complémentaire d'une paire de longerons situés sur l'un et l'autre des bords latéraux longitudinaux du véhicule. Le longeron complémentaire passe sous un tablier situé dans la partie avant de l'intérieur du véhicule, de façon à traverser la caisse du véhicule. Le longeron complémentaire comporte :
- une partie de longeron avant qui s'étend vers l'arrière à partir de l'avant de la caisse, au-delà d'un plan transversal se déployant le long d'une paroi verticale du tablier, et
- une partie de longeron arrière qui s'étend vers l'avant à partir de l'arrière de la caisse au-delà dudit plan transversal et qui présente une surface s'étendant selon la direction longitudinale du véhicule, laquelle partie de longeron arrière est reliée à la partie de longeron avant de telle sorte que les deux parties de longeron se chevauchent.

Une pièce d'assemblage vient renforcer la liaison entre les deux parties de longeron et le tablier.

Le but de la présente invention est de fournir une structure de châssis arrière de véhicule automobile, qui comporte une pièce de liaison et de renfort conçue de telle sorte qu'elle permette une augmentation de la résistance mécanique au choc, en endurance et en torsion de la structure tout en permettant une réduction de matière, par conséquent de masse, de ladite structure.

Un autre but de la présente invention est de fournir une telle structure de châssis arrière, qui soit de conception et de réalisation simple, par conséquent économique.

Pour parvenir à ces buts, la présente invention a pour objet une nouvelle structure de châssis arrière de véhicule automobile conformément à l'objet de la revendication 1.

Selon le mode préféré de réalisation de l'invention, la pièce de jonction est située dans la zone de fixation de la chape de train arrière du véhicule et est réalisée dans un matériau dont les caractéristiques mécaniques sont plus élevées que celles du longeronnet avant, de telle sorte que l'on concentre dans la zone de fixation de la chape de train arrière le besoin de caractéristiques mécaniques plus élevées et que l'on peut diminuer au moins la masse du longeronnet avant.

Selon l'invention, la pièce de jonction présente une forme simple, qui est obtenue par de simples opérations de formage, de pliage et de relevage de bords à partir d'une plaque plane.

La pièce de jonction présente une section en forme de « U » inversé.

De préférence, la pièce de jonction est fixée sur le longeronnet avant, le longeron intérieur et la planche à talon par des points de soudure électrique (PSE).

Les points de soudure électriques sont avantageusement réalisés sur des bordures étroites en extension de la pièce de jonction, qui viennent s'appliquer sur les parois en regard du longeronnet avant, du longeron intérieur et de la planche à talon.

La pièce de jonction présente, au moins sur sa partie de fond de la forme en « U », des nervures longitudinaux, de façon à augmenter encore la résistance en cas de choc de la structure.

De plus, il peut être prévu, sur la face latérale inférieure de la pièce de jonction de section en « U », un orifice permettant le passage vers l'intérieur de la pièce de jonction d'un moyen de soudage électrique.

La présente invention a aussi pour objet un véhicule automobile, qui présente une structure de châssis arrière conforme à celle décrite ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue de dessous de la partie droite d'une structure de châssis arrière, selon la présente invention,
- la figure 2 est une vue de dessous, en perspective, de la pièce de jonction entre le longeronnet avant et le longeron intérieur, selon la présente invention,
- la figure 3 est un schéma fonctionnel de la solution technique de la figure 2, par conséquent de la solution de la présente invention,
- la figure 4 est une vue de dessous, en perspective, du longeron avant, selon l'art antérieur, et
- la figure 5 est un schéma fonctionnel de la solution de l'art antérieur représentée sur la figure 4.

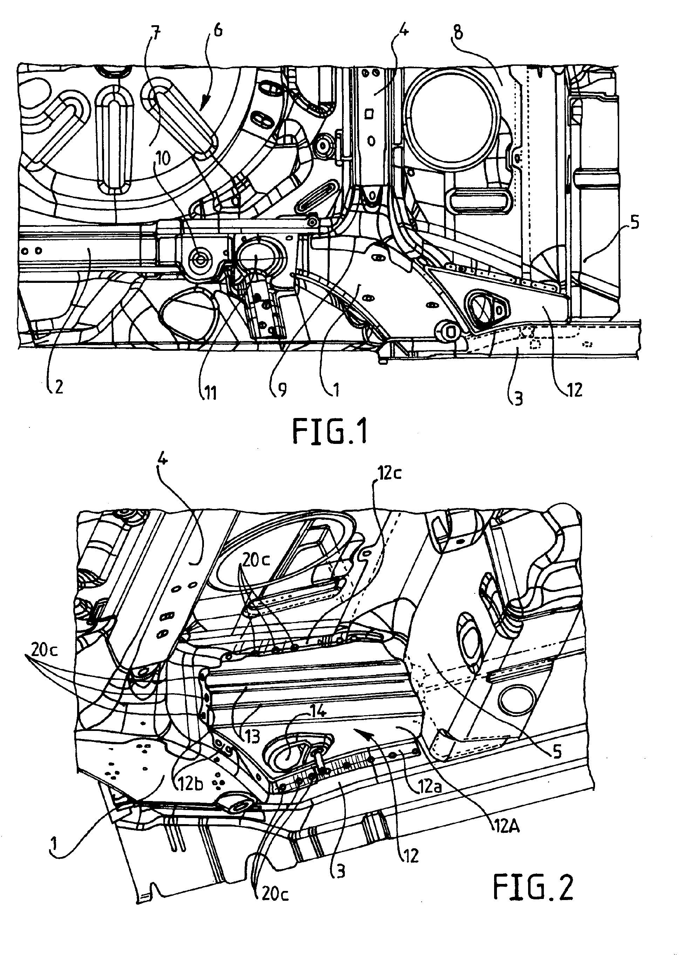

En référence au dessin de la figure 1, on a représenté, en vue de dessous, une partie latérale d'une structure de châssis arrière de véhicule automobile. Cette partie droite de la structure est donnée à titre d'exemple, la partie gauche non représentée étant mutatis mutandis identique à la partie droite.

Cette partie de structure comprend, de manière classique, différentes pièces longitudinales et transversales en tôle pliée et en forme de corps creux du cadre du châssis. Les pièces longitudinales comprennent le longeron complémentaire ou auxiliaire, désigné « longeronnet » dans le présent texte, en deux parties, à savoir le longeronnet avant 1 et le longeronnet arrière 2, et le longeron intérieur 3. Les pièces transversales comprennent la traverse arrière 4 et la planche à talon 5. Le cadre de châssis supporte le plancher de charge 6 avec une forme en caisson 7 destinée à recevoir la roue de secours du véhicule, et le plancher d'assise 8. Les références 9, 10 et 11 désignent respectivement l'embout de traverse arrière 9, un des supports d'appui de ressort 10, qui transfèrent le poids du véhicule aux sommets des jambes de suspension, et un support d'appui de la butée de talonnage 11.

Conformément au principe de la présente invention, il est prévu une pièce de jonction, référencée 12 de manière générale, qui assure la liaison entre le longeronnet avant 1 et le longeron intérieur 3. La pièce de jonction 12 a également pour fonction de fixer le longeronnet avant 1 et le longeron intérieur 3 sur la planche à talon 5, de telle sorte que la pièce de jonction 12 forme une entretoise pour résister aux chocs sur le véhicule.

La pièce de jonction 12 est située dans la zone de fixation de la chape de train arrière du véhicule et est réalisée dans un matériau dont les caractéristiques mécaniques sont plus élevées que celles du longeronnet avant 1, de telle sorte que l'on concentre dans la zone de fixation de la chape de train arrière le besoin de caractéristiques mécaniques plus élevées et que l'on peut diminuer la masse de la partie avant au moins du longeronnet avant.

Comme mieux représenté sur le dessin de la figure 2, la pièce de jonction 12 présente une section en forme de « U » inversé, et elle fixée sur le longeronnet avant 1, le longeron intérieur 3 et la planche à talon 5 par des points de soudure électrique (PSE) référencés 20c.

On notera que la pièce de jonction 12 est de conception simple à partir de plans et de droites, ce qui a pour avantage de simplifier son procédé de fabrication.

Les points de soudure électriques 20c sont réalisés sur des bordures étroites 12a, 12b, 12c en extension de la pièce de jonction 12, qui viennent s'appliquer sur les parois en regard du longeronnet avant 1, du longeron intérieur 3 et de la planche à talon 5.

La pièce de jonction 12 présente, au moins sur sa partie de fond de la forme en « U », des nervures longitudinales 13, de façon à augmenter encore la résistance en cas de choc de la structure, et donc de diminuer l'épaisseur de la liaison.

Sur la face latérale inférieure 12A de la pièce de jonction 12, un orifice 14 est prévu pour permettre le passage vers l'intérieur de la pièce de jonction 12 d'un organe de soudage.

La pièce de jonction 12 est obtenue par des opérations relativement simples, qui permettent d'augmenter les caractéristiques mécaniques de la pièce tout en réduisant l'épaisseur, par conséquent sa masse. Ainsi, la partie de fond de la forme en « U » de la pièce, nervurée, est obtenue par une simple opération de formage, les autres opérations de réalisation de la pièce 12 étant de simples opérations de pliage et de relevage des bords.

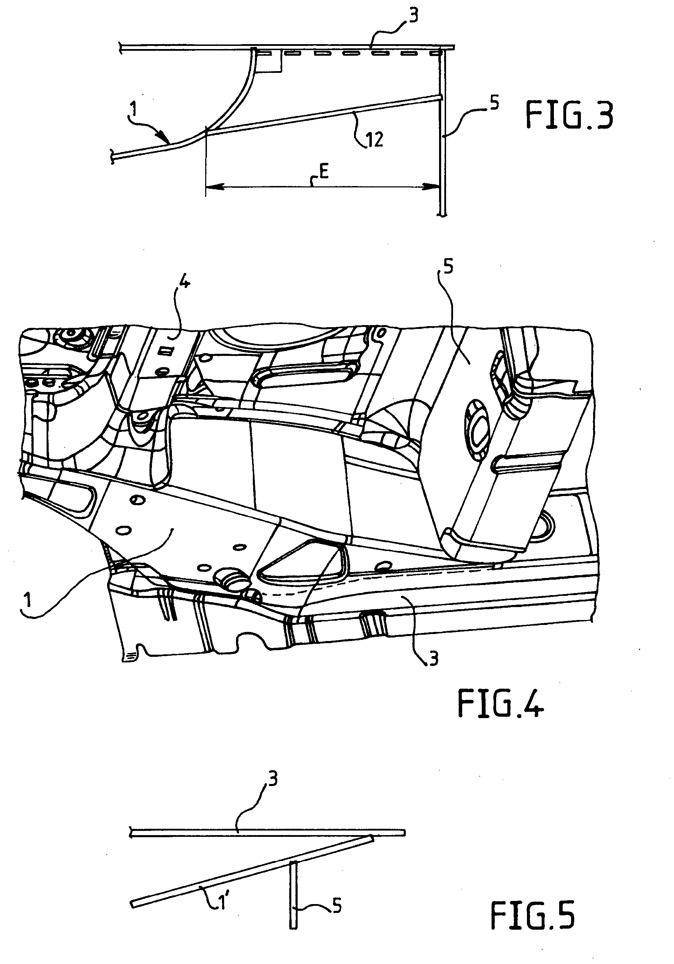

La liaison décrite ci-dessus entre le longeronnet avant 1 et le longeron intérieur 3 présente des avantages économiques. Elle permet, notamment, comme déjà mentionné ci-dessus, un gain en masse par rapport à la solution de l'art antérieur représentée sur le dessin de la figure 4, le gain en masse résultant d'une réduction substantielle de l'épaisseur de la tôle constitutive du longeronnet arrière et de celle constitutive du longeronnet avant. Ce gain en masse, qui peut être de l'ordre de 1,9kg environ, permet une réduction du coût de la structure de châssis arrière du véhicule et une réduction des émissions de CO₂ de ce dernier.

A titre d'exemple, l'ajout, conformément à l'invention, d'une pièce de jonction 12 d'épaisseur 0,97 mm rend possible une réduction de l'épaisseur de la tôle du longeronnet avant à 1,8 mm au lieu de 1,95 mm dans la solution de l'art antérieur et une réduction de l'épaisseur de la tôle du longeronnet arrière à 1,47 mm au lieu de 1, 76 mm.

Comme représenté sur le schéma de la figure 3, la pièce de jonction 12 participe à l'équerrage du longeronnet avant 1 avec le longeron intérieur 3 et joue le rôle d'entretoise, de longueur « E » sur le schéma de la figure 3, entre le longeronnet avant 1 et la planche à talon 5. Elle permet une réduction de la longueur du longeronnet avant l' de la structure connue de l'art antérieur et représentée dans son schéma fonctionnel de la figure 5. Grâce à l'invention, la longueur du longeronnet avant est limitée au contour de la zone fonctionnelle.

La pièce de jonction 12 renforce la structure de châssis arrière, dans la zone même où ce renforcement est nécessaire ; elle permet de concentrer le besoin d'épaisseur et de nuance de métal dur offrant la meilleure résistance au choc, ainsi qu'en endurance et en torsion, dans cette zone de fixation du train arrière.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Structure de châssis arrière de véhicule automobile, comprenant une planche à talon (5), et, sur chacune des parties latérales droite et gauche du véhicule, un longeronnet avant (1), en prolongement d'un longeronnet arrière (2), et un longeron intérieur (3), la liaison entre le longeronnet avant (1) et le longeron intérieur (3) étant réalisée par une pièce de jonction (12), qui a également pour fonction de fixer ledit longeronnet avant (1) et ledit longeron intérieur (3) sur la planche à talon (5), de telle sorte que la pièce de jonction (12) forme une entretoise pour résister aux chocs, ladite pièce de jonction (12) présente une forme obtenue par de simples opérations de formage, de pliage et de relevage de bords à partir d'une plaque de tôle plane, présentant une section en forme de « U » inversé, **caractérisée en ce que** la pièce de jonction (12) présente, au moins sur sa partie de fond de la forme en « U », des nervures longitudinales (13), de façon à augmenter encore la résistance en cas de choc de la structure.

2. Structure selon la revendication 1, **caractérisée en ce que** ladite pièce de jonction (12) est située dans la zone de fixation de la chape de train arrière du véhicule et est réalisée dans un matériau dont les caractéristiques mécaniques sont plus élevées que celles du longeronnet avant (1), de telle sorte que l'on concentre dans la zone de fixation de la chape de train arrière le besoin de caractéristiques mécaniques plus élevées et que l'on peut diminuer la masse de la partie avant au moins du longeronnet avant (1).

3. Structure selon la revendication 1, **caractérisée en ce que** la pièce de jonction (12) est fixée sur le longeronnet avant (1), le longeron intérieur (3) et la planche à talon (5) par des points de soudure électrique (PSE).

4. Structure selon la revendication 3, **caractérisée en ce que** les points de soudure électriques sont réalisés sur des bordures étroites (12a, 12b, 12c) en extension de la pièce de jonction (12), qui viennent s'appliquer sur les parois en regard du longeronnet avant (1), du longeron intérieur (3) et de la planche à talon (5).

5. Structure selon la revendication 1, **caractérisée en ce qu'**il est prévu, sur la face latérale inférieure (12A) de la pièce de jonction (12) de section en « U », un orifice (14) permettant le passage vers l'intérieur de la pièce de jonction (12) d'un organe de soudage.

6. Véhicule automobile, **caractérisé en ce qu'**il présente une structure de châssis arrière conforme à l'une quelconque des revendications 1 à 5.

## Patentansprüche

1. Heckchassisstruktur für ein Kraftfahrzeug, die eine Absatzplatte (5) und auf jedem seitlichen rechten und linken Teil des Fahrzeugs einen kleinen vorderen Längsträger (1) in der Verlängerung eines hinteren kleinen Längsträgers (2) aufweist, und einen inneren Längsträger (3), wobei die Verbindung zwischen dem kleinen vorderen Längsträger (1) und dem inneren Längsträger (3) aus einem Verbindungsteil (12) besteht, das ebenfalls die Aufgabe hat, den kleinen vorderen Längsträger (1) und den inneren Längsträger (3) auf der Absatzplatte (5) derart zu befestigen, dass das Verbindungsteil (12) einen Abstandhalter bildet, um Stößen standzuhalten, wobei das Verbindungsteil (12) eine Form aufweist, die durch einfache Form-, Falt- und Anhebevorgänge von Rändern ausgehend von einer flachen Blechplatte erzielt wird, die einen Querschnitt in Form eines umgekehrten "U" aufweist, **dadurch gekennzeichnet, dass** das Verbindungsteil (12) mindestens auf seinem Bodenteil der "U"-Form Längsrippen (13) derart aufweist, dass die Festigkeit bei Stoß der Struktur noch erhöht wird.

2. Struktur nach Anspruch 1, **dadurch gekennzeichnet, dass** das Verbindungsteil (12) in dem Befestigungsbereich der Heckachsengabel des Fahrzeugs liegt und aus einem Werkstoff hergestellt ist, dessen mechanische Merkmale höher sind als diejenigen des kleinen vorderen Längsbalkens (1), so dass man in der Befestigungszone der Heckachsengabel den Bedarf an höheren mechanischen Merkmalen konzentriert und die Maße des vorderen Teils mindestens des vorderen kleinen Längsbalkens (1) verringern kann.

3. Struktur nach Anspruch 1, **dadurch gekennzeichnet, dass** das Verbindungsteil (12) auf dem kleinen vorderen Längsträger (1), dem inneren Längsträger (3) und der Absatzplatte (5) durch elektrisch geschweißte Punkte (PSE) befestigt ist.

4. Struktur nach Anspruch 3, **dadurch gekennzeichnet, dass** die elektrisch geschweißten Punkte auf schmalen Rändern (12a, 12b, 12c) in Erweiterung des Verbindungsteils (12) ausgeführt sind, die auf den Wänden gegenüber dem kleinen vorderen Längsträger (1), inneren Längsträgers (3) und der Absatzplatte (5) zum Aufliegen kommen.

5. Struktur nach Anspruch 1, **dadurch gekennzeichnet, dass** auf der unteren seitlichen Seite (12A) des Verbindungsteils (12) mit "U"-Querschnitt eine Öffnung (14) vorgesehen ist, die das Durchgehen eines Schweißorgans zum Inneren des Verbindungsteils (12) erlaubt.

6. Kraftfahrzeug, **dadurch gekennzeichnet, dass** es eine Heckchassisstruktur gemäß einem der Ansprüche 1 bis 5 aufweist.

## Claims

1. A rear chassis structure for a motor vehicle, including a heel board (5) and, on each of the left and right lateral parts of the vehicle, a front auxiliary longitudinal member (1), extending from a rear auxiliary longitudinal member (2), and an inner side rail (3), the connection between the front auxiliary longitudinal member (1) and the inner side rail (3) being realized by a linking part (12) that is also used to attach said front auxiliary longitudinal member (1) and said inner side rail (3) to the heel board (5), such that the linking part (12) forms a shock resistant spacer, said linking part (12) has a shape obtained by simple operations of forming, bending and raising of edges from a flat plate of sheet metal, having a cross-section in the shape of an inverted U, **characterized in that** the linking part (12) has, at least on its bottom part of the U shape, longitudinal ribs (13), so as to further increase the resistance of the structure in the case of shock.

2. The structure according to claim 1, **characterized in that** said linking part (12) is situated in the attachment zone of the rear axle yoke of the vehicle and is realized in a material, the mechanical characteristics of which are higher than those of the front auxiliary longitudinal member (1), such that the need for higher mechanical characteristics is concentrated in the attachment zone of the rear axle yoke and that the mass of the front part at least of the front auxiliary longitudinal member (1) can be reduced.

3. The structure according to claim 1, **characterized in that** the linking part (12) is attached on the front auxiliary longitudinal member (1), the inner side rail (3) and the heel board (5) by electric weld spots (EWS) .

4. The structure according to claim 3, **characterized in that** the electric weld spots are realized on narrow edges (12a, 12b, 12c) in extension of the linking part (12), which come to be applied on the walls with respect to the front auxiliary longitudinal member (1), the inner side rail (3) and the heel board (5).

5. The structure according to claim 1, **characterized in that** there is provided, on the lower lateral face (12A) of the linking part (12) of U-shaped cross-section, an orifice (14) permitting the passage towards the interior of the linking part (12) of a welding member.

6. A motor vehicle, **characterized in that** it has a rear chassis structure according to any one of claims 1 to 5.
